# FASCICULE DE BREVET EUROPEEN

(11) **EP 3 170 537 B1**
(45) Date de publication et mention de la délivrance du brevet: **06.06.2018**
(21) Numéro de dépôt: 16189508.1
(22) Date de dépôt: 19.09.2016
(51) Int. Cl.: A63B 29/02

(54) **DISPOSITIF D'AMARRAGE AMOVIBLE DE SECURITE**
ABNEHMBARE SICHERHEITSVORRICHTUNG ZUM VERTÄUEN
SECURE REMOVABLE MOORING DEVICE

(30) Priorité: 18.11.2015 FR 1561081
(43) Date de publication de la demande: 24.05.2017
(73) Titulaire: Zedel, 38920 Crolles (FR)
(72) Inventeur: MAURICE, Alain, 38660 Saint Hilaire du Touvet (FR); MATHE, Olivier, 74440 Taninges (FR); CHABOD, Pierre-Olivier, 38530 Pontcharra (FR)
(74) Mandataire: Talbot, Alexandre

(56) Documents cités:
- EP-A1- 2 909 488
- US-B2- 6 729 821

## Description

### Domaine technique de l'invention

L'invention concerne un dispositif d'amarrage amovible destiné à être fixé dans un trou ou forage, et pouvant être facilement démontable et récupérable, ledit dispositif comprenant :
- une première partie fixe à tête d'expansion,
- une deuxième partie mobile de commande ayant des moyens de coincement coopérant avec la tête d'extrémité pour assurer le blocage ou le déblocage à l'intérieur du forage, et un bouton de préhension relié aux moyens de coincement par des tringles ou câbles de manoeuvre,
- et un ressort sollicitant les moyens de coincement dans le sens du blocage.

### Etat de la technique

On connaît de l'art antérieur, des dispositifs d'amarrage amovibles pouvant être insérés et extraits sans outils dans un forage d'une paroi de rocher ou de béton. L'extraction s'effectue généralement en tirant sur une commande de déblocage, ce qui provoque l'échappement des moyens de coincement de la tête d'expansion. Le document EP 2909488 se rapporte à un ancrage à expansion amovile ayant une structure de goujon rigide, et le le document US 6729821 concerne un ancrage souple à câble. Ces deux types de dispositifs d'amarrage connus possèdent chacun un bouton de préhension, dont le recul à l'encontre d'un ressort assure le déblocage pour la mise en place dans le forage, et son extraction. En l'absence d'actionnement du bouton de préhension, le blocage se rétablit automatiquement suite à la poussée du ressort. L'effet d'expansion qui en résulte assure un blocage efficace, lequel est renforcé par le poids de la charge ou de l'utilisateur suspendu. Il en est autrement à vide, c'est à dire sans poids de suspension sur l'amarrage. Il suffit alors de tirer sur le bouton de préhension avec un effort modéré pour vaincre la force du ressort, et extraire le dispositif de son forage sans action délibérée supplémentaire.

Les documents US 4506924 et 2002/0098054 décrivent des dispositifs d'amarrage ayant des moyens de coincement en forme de coins coopérant avec la tête d'extrémité expansible.

### Objet de l'invention

L'objet de l'invention consiste à réaliser un dispositif d'amarrage amovible ayant une fonction additionnelle confirmant le blocage dans l'état implanté dans le forage

L'appareil selon l'invention est caractérisé en ce que le bouton de préhension est associé à une butée d'arrêt agencée sur la première partie fixe), lesdits bouton et butée étant déplaçables l'un par rapport à l'autre par un mouvement relatif de translation pour inhiber dans une position prédéterminée toute commande de déblocage.

Préférentiellement, le bouton de préhension est apte à occuper une première position axiale de réglage décalée de la butée d'arrêt pour indiquer l'état non verrouillé autorisant la commande de déblocage, et est déplaçable vers une deuxième position axiale de réglage en engagement contre la butée d'arrêt pour indiquer l'état verrouillé et inhiber ladite commande de déblocage.

Le voyant est invisible dans la deuxième position axiale, indiquant l'état verrouillé dans lequel les deux demi-bagues ne peuvent plus reculer sur la tête d'expansion, et perdre contact avec la paroi interne du forage. Pour le retour vers l'état non verrouillé, il est impératif de redéplacer manuellement en sens opposé le bouton de préhension vers la première position de réglage. Une action manuelle spécifique est donc nécessaire de la part de l'utilisateur pour verrouiller et déverrouiller le dispositif.

Selon un premier mode de réalisation préférentiel, les moyesn de coincement comportent au moins deux demi-bagues entraînées par les tringles de manoeuvre solidaires d'une douille d'entraînement, sur laquelle est monté le bouton de préhension. La butée d'arrêt est agencée au bout d'une extension de la première partie fixe et en regard du bouton de préhension. Le bouton de préhension comporte un alésage axial taraudé qui coopère avec un filetage conjugué prévu sur la douille d'entraînement pour déplacer ledit bouton de préhension entre les première et deuxième positions de réglage.

Avantageusement, la butée d'arrêt est pourvue d'une collerette axiale ayant une surface latérale cylindrique colorée pour constituer un voyant indiquant lorsqu'il est visible, que le dispositif d'amarrage se trouve dans un état implanté non verrouillé.

Préférentiellemnt, le déplacement en translation du bouton de préhension entre les deux positions axiales de réglage intervient en faisant tourner ledit bouton dans le sens du vissage ou dévissage selon le type de pas de vis adopté pour le filetage.

Selon un deuxième mode de réalisation, un dispositif d'amarrage amovible présente une structure souple, dans laquellel la première partie fixe comporte un câble terminé par la tête d'expansion. Le bouton de préhension de la deuxième partie mobile est ajustable axialement pour coopérer dans l'état verrouillé avec la butée d'arrêt solidaire du câble.

Le dispositif d'amarrage amovible selon la présente invention s'applique avantageusement à l'escalade, la spéléologie et aux travaux en hauteurs.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- la figure 1A est une vue en perspective éclatée du dispositf d'amarrage amovible selon un premier mode de réalisation de l'invention ;
- la figure 1B représente une vue identique de la figure 1A, après montage de la deuxième partie de commande sur la première partie fixe ;
- la figure 2 est une vue en coupe axiale du dispositif d'amarrage montré dans l'état initial hors du forage et sans intervention sur le bouton de préhension ;
- la figure 3 est une vue identique du dispositif d'amarrage de la figure 2, en cours d'insertion dans le forage ;
- la figure 4 représente le dispositif d'amarrage dans l'état implanté non verrouillé;
- la figure 5 représente le dispositif d'amarrage dans l'état implanté et verrouillé suite au déplacement du bouton de préhension en appui contre la butée d'arrêt ;
- les figures 6 et 7 illustrent un deuxième mode de réalisation de l'invention, dans lequel la première partie fixe est constituée par un câble souple.

### Description de deux modes particuliers de réalisation

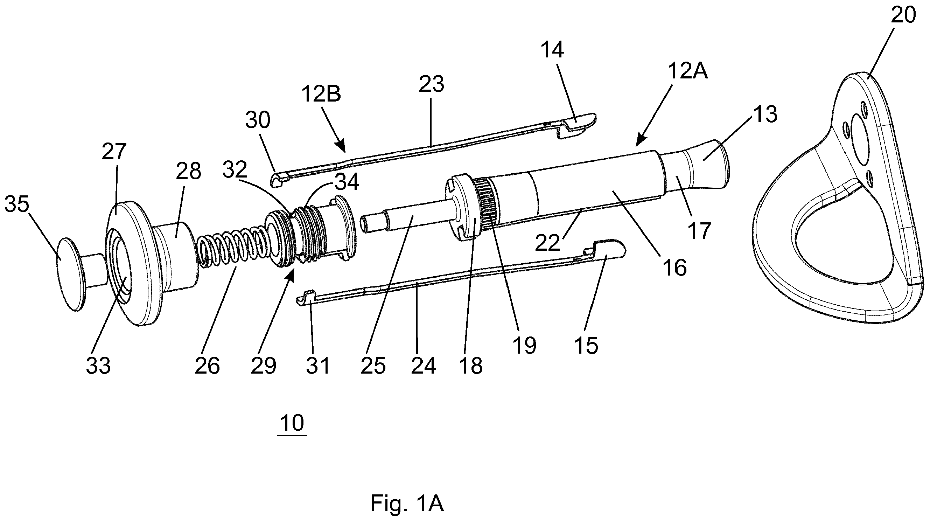

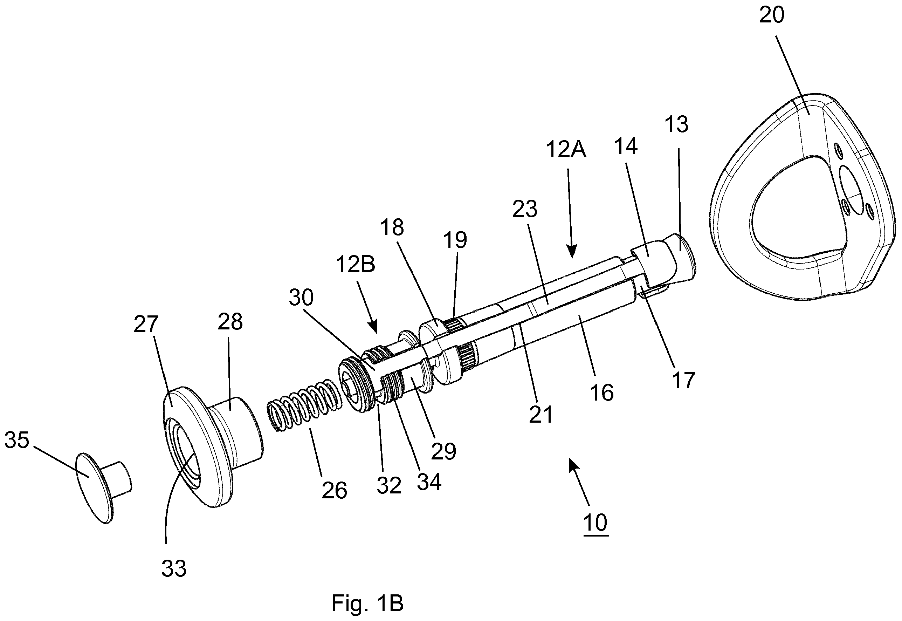

En référence aux figures 1A, 1B et 2-5, le dispositif d'amarrage 10 amovible de sécurité selon la présente invention, est configuré pour être fixé dans un forage 11 ou trou cylindrique préalablement percé dans une paroi de rocher ou de béton afin de supporter en toute sécurité une personne ou une charge en suspension. Après usage, le dispositif d'amarrage 10 doit être facilement démontable et récupérable par extraction hors du forage 11.

Le dispositif d'amarrage 10 est composé d'une première partie fixe 12A en forme de boulon rigide à tête d'expansion 13 tronconique insérable dans le forage 11, et d'une deuxième partie mobile 12B de commande, laquelle est équipée de moyens de coincement, par exemple en forme de demi-bagues 14, 15. Ces demi-bagues sont destinées à coopérer par translation avec la surface latérale tronconique de la tête d'extrémité 13 pour provoquer le blocage ou le déblocage du dispositif dans une zone d'expansion à l'intérieur du forage 11.

La première partie fixe 12A comporte un fût 16 allongé axialement et de section cylindrique. Le fût 16 rigide se prolonge vers la tête d'extrémité 13 tronconique par un rétrécissement 17 dans lequel s'étendent coaxialement les demi-bagues 14, 15 expansibles. Le fût 14 est doté d'une butée d'appui 18 annulaire et d'un organe d'arrêt 19 sur lequel est montée une plaquette 20 d'amarrage servant de moyen de suspension. La plaquette 20 prend appui sur la face apparente de la paroi à l'extérieur du forage 11, mais toute la portion du fût 16 entre la plaquette 20 et la tête d'extrémité 13 est enfoncée à l'intérieur du forage 11.

Le corps du fût 16 est pourvu en plus de deux saignées 21, 22 longitudinales diamétralement opposées dans lesquelles sont engagées à coulissement des tringles de manoeuvre 23, 24 pour actionner les deux demi-bagues 14, 15 de la deuxième partie 12B de commande entre une position de coincement lors de l'expansion et une position de déblocage. A partir de la butée d'appui 18, et à l'opposé de la tête d'extrémité 13, le fût 16 se prolonge par un tronçon 25 intermédiaire cylindrique de diamètre inférieur à celui du fût 16, et sur lequel est enfilé un ressort de compression 26 à spires hélicoïdales.

Le déplacement en translation des tringles de manoeuvre 23, 24 avec les demi-bagues 14, 15 d'expansion s'effectue manuellement au moyen d'un bouton de préhension 27 prolongé par un embout 28 tubulaire. Le diamètre du bouton 27 de préhension est supérieur à celui de l'embout 28, lequel entoure coaxialement une douille 29 d'entraînement des tringles de manoeuvre 23, 24. A l'opposé des demi-bagues 14, 15, les tringles de manoeuvre 23, 24 comportent des attaches 30, 31 fixées dans une gorge 32 annulaire de la douille 29 d'entraînement.

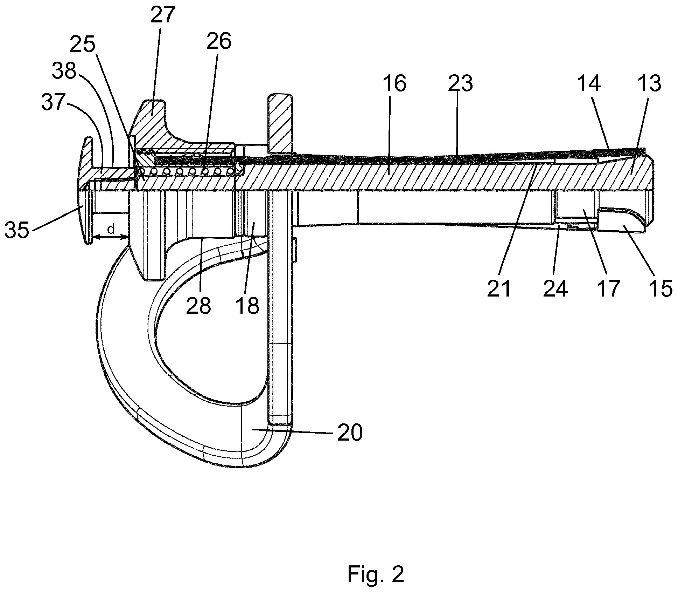

Le ressort 26 de compression s'étend à l'intérieur de la douille 29 tubulaire de manière à la solliciter en translation axiale vers la droite contre la butée d'appui 18 du fût 16 (figure 2), et dans le sens d'engagement des demi-bagues 14, 15 sur la tête d'extrémité 13 tronconique. Le bouton de préhension 27 et l'embout 28 sont traversés par un alésage 33 axial taraudé, lequel coopère avec un filetage 34 conjugé prévu sur la surface latérale externe de la douille 29 d'entraînement.

Une butée d'arrêt 35 est fixée sur une extension axiale 36 terminale du tronçon intermédiaire 25 de la première partie fixe 12A pour limiter la course en translation du bouton de préhension 27 mobile. Le diamètre du prolongement 36 axial est inférieur à celui du tronçon 27. La butée d'arrêt 35 est pourvue d'une collerette 37 axiale ayant une surface latérale cylindrique colorée en rouge pour constituer un voyant 38 indiquant lorsqu'il est visible, que le dispositif d'amarrage 10 n'est pas verrouillé dans le forage 11.

Le fonctionnement du dispositif d'amarrage 10 amovible selon l'invention est le suivant :
Sur la figure 2, le dispositif d'amarrage 10 se trouve dans l'état initial, c'est à dire non enfoncé dans le forage 11. Le bouton de préhension 27 est inactif et décalé axialement de la butée d'arrêt 35 fixe par une distance axiale d. L'embout 28 d'entraînement des tringles de manoeuvre 23, 24 est maintenu contre la butée d'appui 18 par l'action du ressort 26 de compression. Les deux demi-bagues 14, 15 sont engagées sur la tête d'extrémité 13 tronconique du fût 16. Dans cet état initial, tout enfoncement du dispositif d'amarrage 10 dans le forage 11 est rendu impossible suite à la présence des demi-bagues 14, 15 sur l'extrémité du cône.

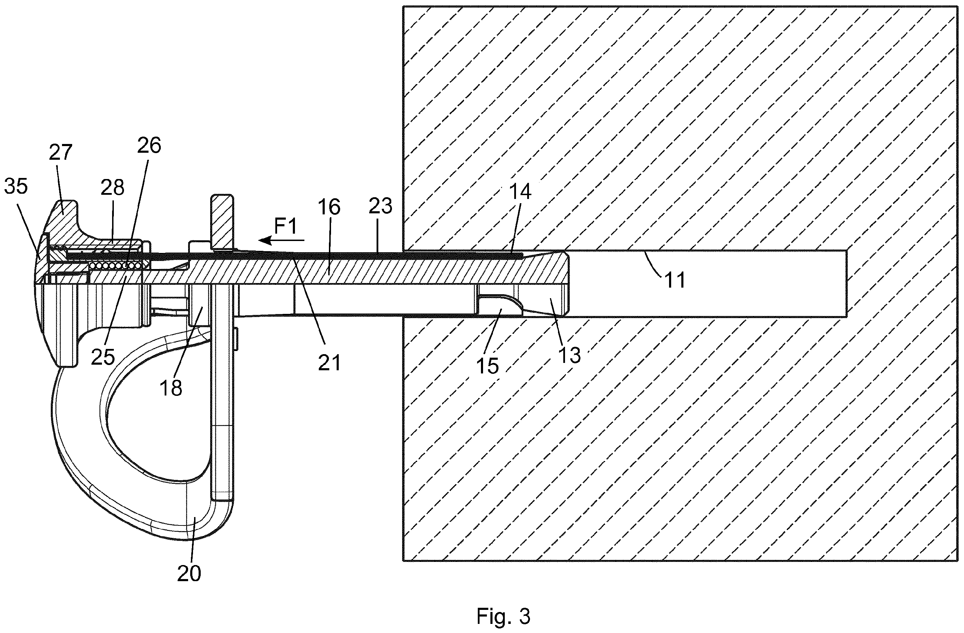

Sur la figure 3, le dispositif d'amarrage 10 est prêt à être inséré dans le forage 11 suite au recul du bouton de préhension 27 contre la butée d'arrêt 35 fixe. La douille 29 recule avec le bouton 27 de préhension, et entraîne les tringles de manoeuvre 23, 24 dans le même sens (flèche F1), ainsi que les demi-bagues 14, 15 qui quittent la tête d'extrémité 13 tronconique en se positionnant dans le rétrécissement 17 du fût 16. La grande base terminale de la tête tronconique 13 présente un diamètre légèrement inférieur au diamètre du forage 11, ce qui permet l'introduction axiale du fût 16. Le ressort de compression 16 est comprimé durant le mouvement de recul du bouton et de la douille 29.

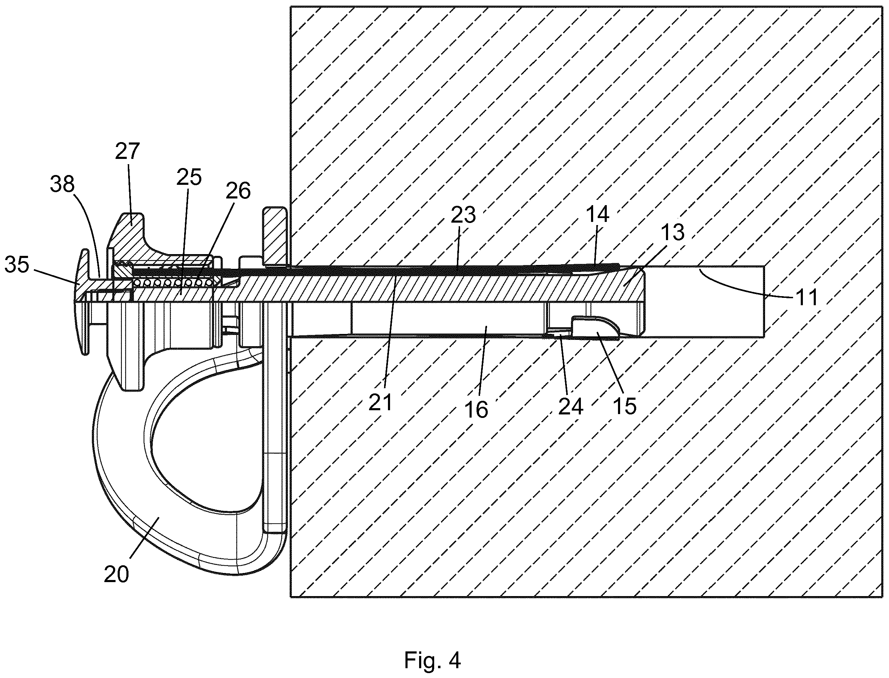

La figure 4 représente le dispositif d'amarrage 10 dans l'état implanté non verrouillé. La plaquette 20 prend appui sur la paroi extérieure avec un enfoncement maximum du fût 16 dans le forage 11. Après relâchement du bouton de préhension 27, le ressort 16 se détend et repousse les deux demi-bagues 14, 15 vers le cône de la tête d'extrémité 13 jusqu'au point de contact avec la paroi interne du forage 11. L'effet d'expansion qui en résulte assure un blocage efficace, lequel est renforcé par le poids de la charge ou de l'utilisateur suspendu à la plaquette 20. Mais en l'absence de poids sur la plaquette 20, une éventuelle traction exercée sur le bouton de préhension 27 permet un déblocage immédiat et rend possible l'extraction du dispositif d'amarrage 10. Le voyant 38 rouge est visible, ce qui indique bien que le dispositif d'amarrage 10 n'est pas verrouillé dans l'état implanté. Dans cet état non verrouillé, le bouton de préhension 27 occupe une première position de réglage sur le tronçon 25, avec un décalage axiale prédéterminé par rapport à la butée d'arrêt 35.

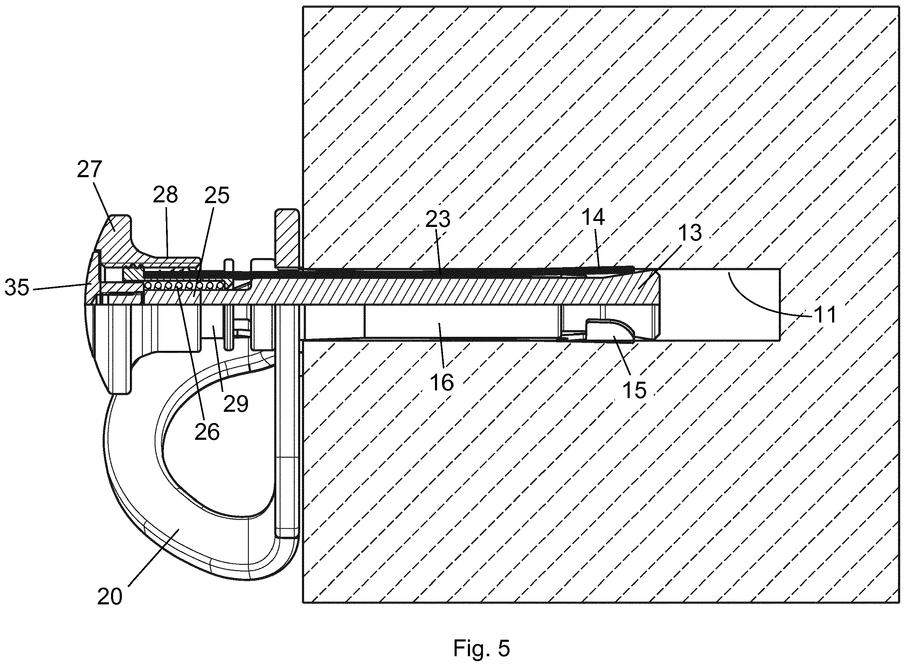

Sur la figure 5, le dispositif d'amarrage 10 se trouve dans l'état implanté verrouillé. Le passage de l'état implanté non verrouillé vers l'état implanté verrouillé s'effectue en rapprochant le bouton de préhension 27 vers la butée d'arrêt 35. Le bouton de préhension 27 occupe alors une deuxième position de réglage en retrait de la première position, de manière à venir en engagement avec la butée d'arrêt 35, pour inhiber de ce fait tout mouvement de déblocage de la deuxième partie 12B de commande. Le voyant 38 rouge devient invisible dans cette deuxième position axiale, indiquant l'état verrouillé dans lequel les deux demi-bagues 14, 15 ne peuvent plus reculer sur le cône de la tête d'extrémité 13, et perdre contact avec la paroi interne du forage 11. Pour le retour vers l'état non verrouillé de la figure 4, il est impératif de redéplacer manuellement en sens opposé le bouton de préhension 27 vers la première position de réglage, avec formation d'un certain décalage axial par rapport à la butée d'arrêt 35 fixe, autorisant le déblocage et l'extraction du dispositif d'amarrage 10.

Le déplacement en translation du bouton de préhension 27 entre les deux positions axiales de réglage intervient en faisant tourner le bouton 27 avec l'embout 28 dans le sens du vissage ou dévissage selon le type de pas de vis adopté pour le filetage 34. Dans le cas des figures précédemment décrites, le pas du filetage 34 est à gauche, ce qui permet de visser le bouton de préhension 27 pour assurer l'état verrouillé de la figure 5.
Si le pas du filetage 34 est à droite, il faudra dévisser le bouton de préhension 27 pour l'amener dans l'état de verrouillage vers la deuxième position de réglage en contact avec la butée d'arrêt 35.

Un tel système de réglage par vis est particulièrement avantageux, car il permet d'obtenir l'état verrouillé, indépendamment du diamètre du trou de forage 11, étant donné que la deuxième partie de commande 12B pourra s'arrêter à des endroits différents .

Il est bien entendu possible d'assurer le déplacement relatif en translation du bouton de préhension 27 et de la butée d'arrêt 35 par tout autre système mécanique équivalent pour interdire le déblocage dans l'état implanté verrouillé du dispositif d'amarrage 10. Il suffit d'avoir deux butées, l'une sur la première partie fixe 12A, et l'autre sur la deuxième partie de commende 12B, et de déplacer les deux butées l'une relativement à l'autre pour inhiber la commande de déblocage dabs l'état de verrouillage.

Dans le cas de tringles de manoeuvre 23, 24 rigides, le déplacement inhibé de la deuxième partie de commande 12B dans l'état verrouillé provoque en plus un effet de compression des tringles de manoeuvre sur les demi-bagues 14, 15 pour un renforcement de l'ancrage.

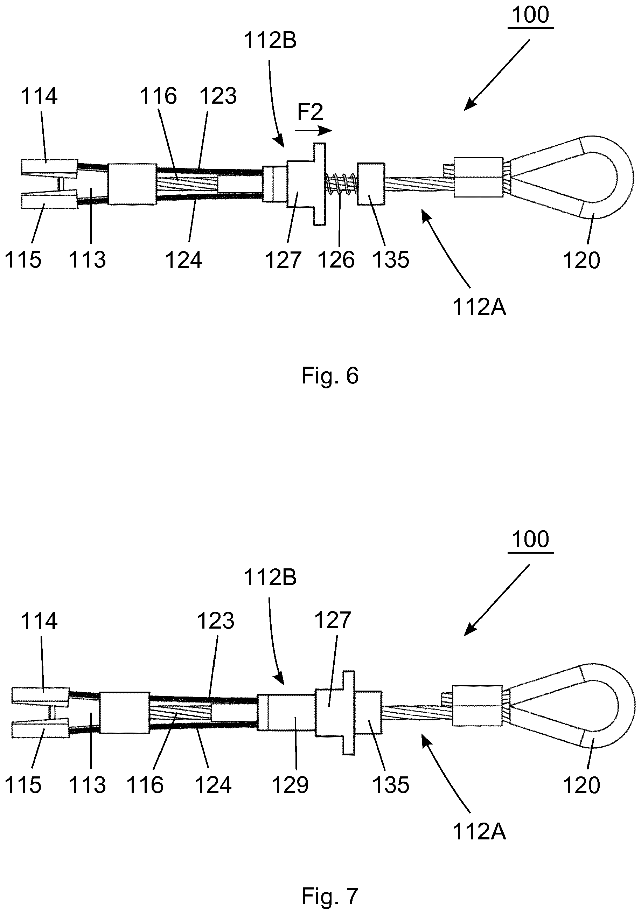

La variante de réalisation des figures 6 et 7 montre un dispositif d'amarrage amovible souple 100 à la place du disposiitf d'amarrage 10 rigide des figures 1A, 1B et 2-5. Les mêmes numéros de repères seront utilisés pour désigner des pièces similaires, mais affectés à la centaine.

La première partie fixe 112A est constituée par un câble 116 de résistance élevée à la place du fût 16 métallique, l'une des extrémités du câble 116 étant conformée en boucle d'attache 120, et l'autre extrémité étant équipée d'une tête d'expansion, notamment de forme tronconique 113.

La deuxième partie mobile 112B comporte un bouton de préhension 127 destiné à déplacer deux demi-bagues 114, 115 coopérant par translation avec la tête tronconique 113. A la place des tringles de manoeuvre rigides, on utilise des câbles de commande 123, 124 pour relier les demi-bagues 114, 115 au bouton de préhension 127. Un ressort de compression 126 est agencé autour du câble 116 entre le boutonde préhension 127 et une butée d'arrêt 135 fixée sur le câble 116.

Le déblocage intervient d'une manière classique en tirant sur le bouton de préhension à partie d'une première position axiale de réglage dans le sens de la flèche F2 (figure 6) jusq'à la venue en engagement contre la butée d'arrêt 135. Les demi-bagues 114, 115 s'éloignent de la tête d'extrémité 113 tronconique et permettent l'insertion dans le trou du forage.

Pour verrouiller le dispositif d'amarrage 100 une fois implanté dans le forage, le bouton de préhension 127 est positionné, par exemple par vissage ou dévissage le long d'une douille 129, vers une deuxième position de réglage contre le butée d'arrêt 135 (figure 7). Tout mouvement de déblocage devient impossible, et le dispositif d'amarrage 100 est maintenu dans l'état implanté verrouillé. Pour déverrouiller, il faudra remettre le bouton de préhension 127 vers la première position de réglage de la figure 6, laquelle est décalée axialement de la butée d'arrêt 135.

Selon une autre variante, les éléments de coincement peuvent être formés par des cames ou des coins. La tête d'expansion peut avoir des formes quelconques en fonction du type des moyens de coincement.

L'invention s'applique à tout autre type d'amarrage amovible nécessitant d'être verrouillé après installation.

## Revendications

1. Dispositif d'amarrage (10, 100) amovible destiné à être fixé dans un trou ou forage (11), et pouvant être facilement démontable et récupérable, ledit dispositif comprenant :
- une première partie fixe (12A, 112A) à tête d'expansion (13, 113),
- une deuxième partie mobile (12B, 112B) de commande ayant des moyens de coincement coopérant avec la tête d'expansion (13, 113) pour assurer le blocage ou le déblocage à l'intérieur du forage, et un bouton de préhension (27, 127) relié aux moyens de coincement par des tringles ou câbles de manoeuvre (23, 24 ;123,124),
- et un ressort (26, 126) sollicitant les moyens de coincement dans le sens du blocage,
**caractérisé en ce que** le bouton de préhension (27, 127) est associé à une butée d'arrêt (35, 135) agencée sur la première partie fixe (12A, 112A), lesdits bouton et butée étant déplaçables l'un par rapport à l'autre par un mouvement relatif de translation pour inhiber dans une position prédéterminée toute commande de déblocage.

2. Dispositif d'amarrage (10, 100) selon la revendication 1, **caractérisé en ce que** le bouton de préhension (27, 127) est apte à occuper une première position axiale de réglage décalée de la butée d'arrêt (35, 135) pour indiquer l'état non verrouillé autorisant la commande de déblocage, et est déplaçable vers une deuxième position axiale de réglage en engagement contre la butée d'arrêt (35, 135) pour indiquer l'état verrouillé et inhiber ladite commande de déblocage.

3. Dispositif d'amarrage (10) rigide selon la revendication 1 ou 2, **caractérisé en ce que** les moyesn de coincement comportent au moins deux demi-bagues (14, 15) entraînées par les tringles de manoeuvre(23, 24) solidaires d'une douille (29) d'entraînement, sur laquelle est monté le bouton de préhension (27).

4. Dispositif d'amarrage (10) selon la revendication 3, **caractérisé en ce que** les tringles de manoeuvre (23, 24) sont fixées par des attaches (30, 31) dans une gorge (32) annulaire de la douille (29) supportant le bouton de préhension (27).

5. Dispositif d'amarrage (10) selon l'une des revendications précédentes, **caractérisé en ce que** la butée d'arrêt (35) est agencée au bout d'une extension (36) de la première partie fixe (12A), et en regard du bouton de préhension (27).

6. Dispositif d'amarrage (10) selon la revendication 3, **caractérisé en ce que** le bouton de préhension (27) comporte un alésage (33) axial taraudé qui coopère avec un filetage (34) conjugué prévu sur la douille (29) d'entraînement pour déplacer ledit bouton de préhension entre les première et deuxième positions de réglage.

7. Dispositif d'amarrage (10) selon la revendication 5 ou 6, **caractérisé en ce que** la butée d'arrêt (35) est pourvue d'une collerette (37) axiale ayant une surface latérale cylindrique colorée pour constituer un voyant (38) indiquant lorsqu'il est visible, que le dispositif d'amarrage (10) se trouve dans un état implanté non verrouillé.

8. Dispositif d'amarrage (10) selon la revendication 6, **caractérisé en ce que** le déplacement en translation du bouton de préhension (27) entre les deux positions axiales de réglage intervient en faisant tourner ledit bouton dans le sens du vissage ou dévissage selon le type de pas de vis adopté pour le filetage (34).

9. Dispositif d'amarrage (10) selon la revendication 8, **caractérisé en ce que** pour un pas de vis à gauche du filetage (34), le bouton de préhension est vissé à droite pour l'amener dans l'état verrouillé.

10. Dispositif d'amarrage (10) selon la revendication 8, **caractérisé en ce que** pour un pas de vis à droite du filetage (34), le bouton de préhension est dévissé à gauche pour l'amener dans l'état verrouillé.

11. Dispositif d'amarrage (10) selon l'une des revendications 3 à 10, **caractérisé en ce que** la tête d'expansion (13) est tronconique sur laquelle s'engagent les demi-bagues (14, 15) lors du blocage.

12. Dispositif d'amarrage (100) souple selon la revendication 1 ou 2, **caractérisé en ce que** la première partie fixe (112A) comporte un câble (116) terminé par la tête d'expansion (113) tronconique, et que le bouton de préhension (127) de la deuxième partie mobile (112B) est ajustable axialement pour coopérer dans l'état verrouillé avec la butée d'arrêt (135) solidaire du câble (116).

## Patentansprüche

1. Abnehmbare Befestigungsvorrichtung (10, 100), die dazu bestimmt ist, in einem Loch oder einer Bohrung (11) befestigt zu werden, und die leicht demontier- und wiederverwendbar ist, welche Vorrichtung umfasst:
- einen ersten, festen Teil (12A, 112A) mit einem Spreizkopf (13, 113),
- einen zweiten, beweglichen Bedienungsteil (12B, 112B), der Keilmittel aufweist, die mit dem Spreizkopf (13, 113) zusammenwirken, um die Blockierung oder Freigabe innerhalb der Bohrung sicherzustellen, sowie einen Greifknopf (27, 127), der mit den Keilmitteln über Betätigungsstangen oder -kabel (23, 24;123,124) verbunden ist,
- sowie eine Feder (26, 126), welche die Keilmittel in Blockierungsrichtung zieht,
**dadurch gekennzeichnet, dass**
der Greifknopf (27, 127) mit einem Stopp-Anschlag (35, 135) gekoppelt ist, der an dem ersten, festen Teil (12A, 112A) vorgesehen ist, wobei Knopf und Anschlag bezüglich einander beweglich sind durch eine relative Translationsbewegung, um in einer vorbestimmten Position jeglichen Freigabebefehl zu verhindern.

2. Befestigungsvorrichtung (10, 100) nach Anspruch 1, **dadurch gekennzeichnet, dass** der Greifknopf (27, 127) geeignet ist, eine erste Axial-Einstell-Position einzunehmen, die zum Stopp-Anschlag (35, 135) versetzt ist, um den nicht verriegelten Zustand anzuzeigen, der den Freigabebefehl ermöglicht, und beweglich in Richtung auf eine zweite Axial-Einstell-Position ist, in der er am Stopp-Anschlag (35, 135) eingreift, um den verriegelten Zustand anzuzeigen und den Freigabebefehl zu verhindern.

3. Starre Befestigungsvorrichtung (10) nach Anspruch 1 oder 2, **dadurch gekennzeichnet, dass** die Keilmittel mindestens zwei Halbringe (14, 15) umfassen, die von den Betätigungsstangen (23, 24) mitgenommen werden, die fest mit einer Mitnahmehülse (29) verbunden sind, auf die der Greifknopf (27) montiert ist.

4. Befestigungsvorrichtung (10) nach Anspruch 3, **dadurch gekennzeichnet, dass** die Betätigungsstangen (23, 24) mittels Halterungen (30, 31) in einer ringförmigen Rille (32) der Hülse (29) befestigt sind, die den Greifknopf (27) trägt.

5. Befestigungsvorrichtung(10) nach einem der vorstehenden Ansprüche, **dadurch gekennzeichnet, dass** der Stopp-Anschlag (35) am Ende einer Verlängerung (36) des ersten, festen Teils (12A) und gegenüber dem Greifknopf (27) vorgesehen ist.

6. Befestigungsvorrichtung (10) nach Anspruch 3, **dadurch gekennzeichnet, dass** der Greifknopf (27) eine innengewindete Axialbohrung (33) umfasst, die mit einem passenden Gewinde (34) zusammenwirkt, das an der Mitnahmehülse (29) vorgesehen ist, um den Greifknopf zwischen der ersten und zweiten Einstellposition hin und her zu bewegen.

7. Befestigungsvorrichtung (10) nach Anspruch 5 oder 6, **dadurch gekennzeichnet, dass** der Stopp-Anschlag (35) mit einer Axialmanschette (37) mit einer farbigen zylindrischen Seitenfläche versehen ist, um eine Anzeige (38) zu bilden, die, wenn sie sichtbar ist, anzeigt, dass sich die Befestigungsvorrichtung (10) in einem eingebauten, nicht verriegelten Zustand befindet.

8. Befestigungsvorrichtung (10) nach Anspruch 6, **dadurch gekennzeichnet, dass** die Translationsbewegung des Greifknopfs (27) zwischen den beiden axialen Einstellpositionen erfolgt, indem dieser Knopf in Einschraub- oder Ausschraubrichtung gedreht wird, je nach Art des für das Gewinde (34) verwendeten Schraubengangs.

9. Befestigungsvorrichtung (10) nach Anspruch 8, **dadurch gekennzeichnet, dass** bei einem linksgängigen Schraubgewinde (34) der Greifknopf nach rechts gedreht wird, um ihn in den verriegelten Zustand zu bringen.

10. Befestigungsvorrichtung (10) nach Anspruch 8, **dadurch gekennzeichnet, dass** bei einem rechtsgängigen Schraubgewinde (34) der Greifknopf nach links gedreht wird, um ihn in den verriegelten Zustand zu bringen.

11. Befestigungsvorrichtung(10) nach einem der Ansprüche 3-10, **dadurch gekennzeichnet, dass** der Spreizkopf (13), um den die Halbringe (14, 15) bei der Blockierung greifen, kegelstumpfförmig ist.

12. Anpassungsfähige Befestigungsvorrichtung (100) nach Anspruch 1 oder 2, **dadurch gekennzeichnet, dass** der erste, feste Teil (112A) ein Kabel (116) aufweist, an dessen Ende der kegelstumpfförmige Spreizkopf (113) sitzt, und dass der Greifknopf (127) des zweiten, beweglichen Teils (112B) axial verstellbar ist, um im verriegelten Zustand mit dem Stopp-Anschlag (135) zusammenzuwirken, der fest verbunden mit dem Kabel (116) ist.

## Claims

1. Removable anchoring device (10, 100) designed to be fixed in an aperture or a bore hole (11), and able to be easily disassembled and recovered, said device comprising:
- a fixed first part (12A, 112A) with expansion head (13, 113),
- a second movable control part (12B, 112B) having means of wedging cooperating with the expansion head (13, 113) to perform blocking or releasing inside the bore hole, and a gripping knob (27, 127) connected to the means of wedging by operating rods or cables (23, 24;123,124),
- and a spring (26, 126) biasing the means of wedging in the blocking direction,
**characterized in that** the gripping knob (27, 127) is associated with a stop (35, 135) arranged on the fixed first part (12A, 112A), said knob and stop being movable with respect to another by a relative translational movement to disable any release command in a predefined position.

2. Anchoring device (10, 100) according to claim 1, **characterized in that** the gripping knob (27, 127) is able to occupy a first axial adjustment position offset from the stop (35, 135) to indicate the non-locked state enabling the release command, and is movable to a second axial adjustment position in engagement against the stop (35, 135) to indicate the locked state and to disable said release command.

3. Rigid anchoring device (10) according to claim 1 or 2, **characterized in that** the means of wedging comprise at least two half-rings (14, 15) driven by the operating rods (23, 24) integral with a drive sleeve (29) on which the gripping knob (27) is mounted.

4. Anchoring device (10) according to claim 3, **characterized in that** the operating rods (23, 24) are fixed by attachments (30, 31) in an annular groove (32) of the sleeve (29) supporting the gripping knob (27).

5. Anchoring device (10) according to one of the foregoing claims, **characterized in that** the stop (35) is arranged at the end of an extension (36) of the fixed first part (12A), and facing the gripping knob (27).

6. Anchoring device (10) according to claim 3, **characterized in that** the gripping knob (27) comprises a tapped axial bore (33) which cooperates with a conjugate thread (34) provided on the drive sleeve (29) to move said gripping knob between the first and second adjustment positions.

7. Anchoring device (10) according to claim 5 or 6, **characterized in that** the stop (35) is provided with an axial flange (37) having a coloured cylindrical lateral surface to constitute an indicator (38) indicating, when it is visible, that the anchoring device (10) is in a non-locked inserted state.

8. Anchoring device (10) according to claim 6, **characterized in that** the translational movement of the gripping knob (27) between the two axial adjustment positions is achieved by turning said knob in the tightening or loosening direction depending on the type of screw thread used for the thread (34).

9. Anchoring device (10) according to claim 8, **characterized in that** for a lefthand screw thread of the thread (34), the gripping knob is tightened to the right to move it to the locked state.

10. Anchoring device (10) according to claim 8, **characterized in that** for a righthand screw thread of the thread (34), the gripping knob is loosened to the left to move it to the locked state.

11. Anchoring device (10) according to one of claims 3 to 10, **characterized in that** the expansion head (13) is frustum-shaped on which the half-rings (14, 15) engage when blocking is performed.

12. Flexible anchoring device (100) according to claim 1 or 2, **characterized in that** the fixed first part (112A) comprises a cable (116) terminated by the truncated cone shaped expansion head (113), and that the gripping knob (127) of the movable second part (112B) is axially adjustable to cooperate in the locked state with the stop (135) integral with the cable (116).
